# FASCICULE DE BREVET EUROPEEN

(11) **EP 4 330 093 B1**
(45) Date de publication et mention de la délivrance du brevet: **26.02.2025**
(21) Numéro de dépôt: 22717224.4
(22) Date de dépôt: 23.03.2022
(51) Int. Cl.: B60T 13/00, B60T 17/22

(54) **PROCÉDÉ DE DIAGNOSTIC DE PLAUSIBILITÉ D'INFORMATIONS DE MESURE DE PRESSION DANS UN SERVOFREIN**
VERFAHREN ZUR DIAGNOSTIZIERUNG DER PLAUSIBILITÄT DER DRUCKMESSUNG IN EINEM BREMSKRAFTVERSTÄRKER
DIAGNOSTIC PROCESS OF THE PLAUSIBILITY OF INFORMATION CONCERNING PRESSURE MEASUREMENTS IN A BRAKE BOOSTER

(30) Priorité: 29.04.2021 FR 2104464
(43) Date de publication de la demande: 06.03.2024
(73) Titulaire: Stellantis Auto SAS, 78300 Poissy (FR)
(72) Inventeur: MIQUEL, Claire, 95220 HERBLAY (FR); ROUAULT, Vincent, 78180 MONTIGNY LE BRETONNEUX (FR); BAUERHEIM, Jerome, 92250 LA GARENNE COLOMBES (FR)
(74) Mandataire: BCIP
(86) Numéro de dépôt international: PCT/FR2022/050540
(87) Numéro de publication internationale: WO 2022/229533

(56) Documents cités:
- DE-A1- 10 052 257
- DE-A1- 19 936 436
- DE-U1- 202009 019 176
- US-A1- 2012 245 815
- US-A1- 2014 110 994

## Description

La présente invention revendique la priorité de la demande française 2104464 déposée le 29 avril 2021.

L'invention concerne de manière générale le domaine de la sécurité de fonctionnement d'un système de freinage de véhicule. Plus particulièrement, l'invention se rapporte à un procédé de diagnostic de la plausibilité d'informations de mesure de pression dans un servofrein d'un système de freinage de véhicule.

Dans le système de freinage d'un véhicule automobile, le servofrein, dit aussi « master-vac », est un dispositif d'assistance à dépression qui est intercalé entre la pédale de frein et le maître-cylindre du circuit hydraulique de freinage. La présence d'une dépression dans une chambre du servofrein permet d'obtenir une amplification de l'effort du conducteur sur la pédale de frein. Cette amplification est nécessaire pour obtenir une pression de freinage suffisante dans les circuits hydrauliques du système de freinage lors d'un appui sur la pédale de frein, tout en évitant au conducteur la sensation de « pédale dure ». Dans les véhicules ayant un moteur thermique de type essence, la dépression nécessaire au fonctionnement du servofrein peut être fournie par le moteur thermique, plus précisément, par la dépression présente dans le collecteur d'admission de celui-ci. Dans les autres véhicules, une pompe à vide est nécessaire pour procurer cette dépression. La pompe à vide peut être une pompe à vide attelée, typiquement dans les véhicules ayant un moteur thermique de type Diesel, ou bien une pompe à vide électrique typiquement dans les véhicules électrifiés de type hybride ou tout électrique.

La pompe à vide est un organe critique pour le fonctionnement du servofrein et doit fournir en permanence un niveau de dépression suffisant. Par le document EP2493736A1, il est connu un procédé de diagnostic du fonctionnement de la pompe à vide d'un système de freinage de véhicule. La pompe à vide est actionnée entre une pression de mise en marche et une pression d'arrêt en vue de générer une dépression. Une période de vide entre la pression de mise en marche et la pression d'arrêt est déterminée et est comparée avec une période de référence définie en fonction du niveau de la tension d'alimentation électrique dans le véhicule. Un signal de défaut est généré dans le cas où la période de vide est supérieure à la période de référence.

Par ailleurs, il est connu dans l'état de la technique (voir le document US 2014/110994 A1) d'utiliser deux capteurs de pression de technologie différente pour la mesure de la dépression dans le servofrein. Un diagnostic de cohérence est réalisé sur les informations de pression délivrées par les deux capteurs de pression. Ce diagnostic de cohérence surveille que les informations de pression fournies par les capteurs restent dans une plage de tolérance acceptable et détecte une anomalie lorsqu'un delta entre les informations de pression devient supérieur à un seuil de pression prédéfini, par exemple, de 100 mbar. Sur le plan de la sécurité de fonctionnement, le choix de deux capteurs de pression de technologie différente procure une robustesse qui permet de se satisfaire du diagnostic de cohérence susmentionné pour obtenir le niveau de sécurité requis dans la classification standard « ASIL » (pour "Automotive Security Integrity Level" en anglais).

Par contre, dans une configuration avec deux capteurs de pression de technologie identique, le diagnostic de cohérence susmentionné est incapable de déterminer un mode commun entre les capteurs et ne permet pas de détecter une dérive simultanée et cohérente entre eux, ni un figeage des informations de pression fournies. En cas de dérive importante des deux capteurs qui indiquent une dépression suffisante alors que ce n'est pas le cas, il peut en découler une prestation de freinage dégradée, voire une absence de freinage, la pompe à vide ne s'enclenchant que lorsque la dépression descend en dessous d'un seuil d'activation de celle-ci. Un nouveau diagnostic sur les informations de pression fournies par les capteurs est donc nécessaire pour cette configuration, afin d'être en conformité avec le niveau de sécurité « ASIL » requis.

Il est souhaitable de proposer un procédé de diagnostic de la plausibilité d'informations de mesure de pression dans un servofrein d'un système de freinage de véhicule, permettant de répondre au besoin susmentionné en étant apte à détecter des anomalies de plausibilité d'informations de mesure de pression lorsque le servofrein est équipé de deux capteurs de pression de technologie identique.

Selon un premier aspect, l'invention concerne un procédé de diagnostic de la plausibilité d'au moins deux informations de pression de servofrein issues de capteurs de pression distincts dans un servofrein d'un système de freinage de véhicule. Conformément à l'invention, le procédé comprend les étapes de a) détecter un appui frein valide par comparaison d'un ratio d'enfoncement de pédale de frein à un seuil de ratio d'enfoncement prédéterminé, b) suivre une évolution de chaque information de pression de servofrein sur une période de temps prédéterminée à partir de la détection à l'étape a) d'un appui frein valide, c) pour chaque information de pression de servofrein, effectuer pendant la période de temps prédéterminée une détection de défaut sur l'information de pression de servofrein par comparaison d'un delta d'évolution de l'information de pression de servofrein à au moins un seuil d'évolution de pression, et d) établir un diagnostic de plausibilité des informations de pression de servofrein à partir des résultats de détection de défaut obtenus à l'étape c).

Selon une caractéristique particulière, l'étape d) comprend également une catégorisation de l'anomalie de plausibilité.

Selon une autre caractéristique particulière, le seuil d'évolution de pression est un seuil variable déterminé en fonction de la vitesse de roulage du véhicule et de la pression atmosphérique.

Selon encore une autre caractéristique particulière, à l'étape a), le ratio d'enfoncement de pédale de frein est déterminé à partir d'une pression hydraulique dans un maître-cylindre du système de freinage de véhicule.

Selon encore une autre caractéristique particulière, le procédé comprend également une vérification de conditions de validité du diagnostic de plausibilité des informations de pression de servofrein, les conditions de validité étant satisfaites lorsqu'est détecté un état actif d'un groupe motopropulseur du véhicule et un appui frein.

Selon encore une autre caractéristique particulière, le procédé comprend également une communication du diagnostic de plausibilité à des moyens de gestion de mode dégradé du véhicule.

L'invention concerne également un système de freinage de véhicule comprenant un servofrein équipé de deux capteurs de pression distincts délivrant des informations de pression de servofrein et un calculateur, dans lequel le calculateur comporte une mémoire stockant des instructions de programme pour la mise en œuvre du procédé brièvement décrit ci-dessus. Selon une caractéristique particulière, les deux capteurs de pression sont de même technologie. Selon une autre caractéristique particulière, le calculateur est un calculateur multifonction moteur du véhicule.

L'invention concerne également un véhicule comprenant un système de freinage tel que décrit brièvement ci-dessus.

D'autres avantages et caractéristiques de la présente invention apparaîtront plus clairement à la lecture de la description détaillée ci-dessous de plusieurs modes de réalisation particuliers de l'invention, en référence aux dessins annexés, dans lesquels :
[Fig.1] La Fig.1 est un bloc-diagramme montrant partiellement l'architecture d'un système de freinage d'un véhicule automobile dans lequel est mis œuvre le procédé de l'invention.
[Fig.2] La Fig.2 est un logigramme d'un mode de réalisation particulier du procédé de l'invention.
[Fig.3] La Fig.3 montre deux diagrammes schématiques illustrant deux situations de vie dans le système de freinage, sans et avec détection de défaut sur une information de pression de servofrein.

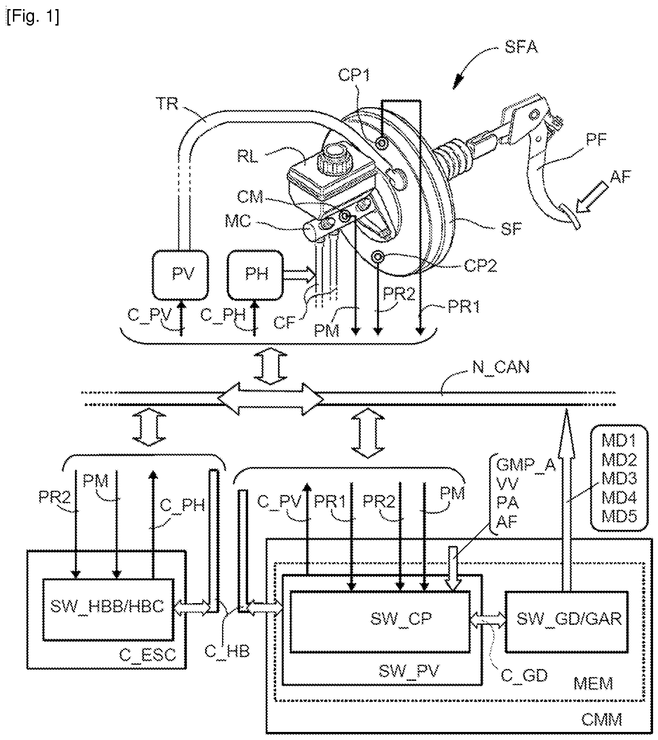

En référence à la Fig.1, il est décrit ci-dessous un exemple de configuration matérielle d'un système de freinage de véhicule dans lequel est mis en œuvre un mode de réalisation particulier du procédé selon l'invention. L'invention est décrite ici dans le cadre d'un véhicule équipé d'une pompe à vide attelée et d'un système de freinage avec assistance « HBB/HBC », par exemple, un véhicule hybride. L'assistance « HBB/HBC » déploie des stratégies de compensation de manque d'assistance au freinage, dite « HBB » pour « Hydraulic Brake Booster » en anglais, et de défaillance d'assistance, dite « HBC » pour « Hydraulic Booster Compensation » en anglais. Ces stratégies « HBB/HBC » sont typiquement embarquées dans le calculateur du système de correction électronique de trajectoire du véhicule, dit correcteur « ESC » ou « ESP », respectivement pour « Electronic Stability Control » ou « Electronic Stability Program » en anglais. Les stratégies « HBB/HBC » agissent sur le freinage par l'activation d'une pompe hydraulique électrique du correcteur « ESC » qui augmente la pression de freinage dans le circuit hydraulique de freinage.

Le système de freinage de véhicule, repéré SFA, n'est représenté que partiellement à la Fig.1. Le système SFA comprend notamment une pédale de frein PF, un servofrein SF, un maître-cylindre MC surmonté d'un réservoir de liquide de frein RL, un circuit hydraulique de freinage CF, une pompe à vide PV, une pompe hydraulique PH et des moyens de commande et contrôle mettant à contribution des calculateurs CMM et C_ESC du véhicule.

Le servofrein SF est intercalé entre la pédale de frein PF et le maître-cylindre MC et est relié à la pompe à vide PV à travers un tuyau de raccordement TR et d'autres organes non représentés, tels que clapets ou valves. Deux capteurs de pression CP1 et CP2, de même technologie, sont prévus pour la mesure de la pression de vide dans le servofrein SF. Dans cet exemple, les capteurs de pression CP1, CP2, sont montés directement sur une paroi de la chambre en dépression du servofrein SF, à des emplacements distincts. En variante, l'un des capteurs de pression pourra être monté à une extrémité du tuyau de raccordement TR, au niveau d'un raccord de dépression du servofrein SF. Les capteurs de pression CP1 et CP2 délivrent respectivement des informations de pression PR1 et PR2.

Le maître-cylindre MC est relié au circuit hydraulique de freinage CF. Un appui frein AF sur la pédale de frein PF par le conducteur provoque, via le servofrein SF, le déplacement d'un piston dans le maître-cylindre MC et, corrélativement, génère une pression de freinage dans le circuit hydraulique de freinage CF. La pression du liquide de frein dans le maître-cylindre MC, désignée ci-après « pression de maître-cylindre », est mesurée par un capteur de pression CM qui délivre une information de pression de maître-cylindre PM. Comme visible à Fig.1, le capteur de pression CM est monté ici sur le maître-cylindre MC.

Dans cet exemple de configuration, comme indiqué plus haut, la pompe à vide PV est une pompe attelée au moteur thermique du groupe motopropulseur du véhicule. De manière générale, la pompe à vide PV pourra être une pompe attelée ou une pompe électrique, selon le véhicule.

La pompe hydraulique PH est couplée au circuit hydraulique de freinage CF. La pompe hydraulique PH est ici la pompe hydraulique électrique du correcteur « ESC » susmentionné.

Le calculateur CMM est typiquement le calculateur multifonction moteur du véhicule qui héberge différentes stratégies de commande et contrôle du groupe motopropulseur et du véhicule, via des modules logiciels embarqués. En particulier, comme visible à la Fig.1, trois modules logiciels SW_CP, SW_PV et SW_GD/GAR sont implantés dans une mémoire MEM du calculateur CMM.

Le module logiciel SW_CP autorise la mise en œuvre du procédé selon l'invention par l'exécution d'instructions de code de programme par un processeur (non représenté) du calculateur CMM. Dans ce mode de réalisation particulier, comme montré à la Fig.1, le module logiciel SW_CP est implanté dans le module logiciel SW_PV qui est chargé du pilotage de la pompe à vide PV. Pour la mise en œuvre du procédé selon l'invention, le module logiciel SW_CP reçoit en entrée les informations de pression de servofrein PR1 et PR2, l'information de pression de maître-cylindre PM et d'autres informations généralement disponibles dans le calculateur CMM, comme une information GMP_A indiquant l'état actif ou pas du groupe motopropulseur, une information de vitesse de véhicule VV, une information de pression atmosphérique PA et une information d'appui frein AF.

Dans la présente invention, selon le résultat de la vérification de plausibilité réalisée sur les informations de pression PR1, PR2, et effectuée par le module logiciel SW_CP, le module logiciel SW_PV pourra être sollicité par le module logiciel SW_CP pour commander un réenclenchement de la pompe à vide PV. Le module logiciel SW_PV actionne la pompe à vide PV au moyen d'une commande C_PV.

De manière générale, le module logiciel SW_GD/GAR a à charge la gestion des diagnostics (GD) et la gestion des arbitrages et reconfigurations (GAR). Ainsi, le module logiciel SW_GD/GAR réalise trois fonctions générales qui sont le post-traitement des diagnostics embarqués générant des codes de défaut de type dit « APV » pour les opérations de maintenance du véhicule en après-vente, le post-traitement des diagnostics embarqués de type OBD (pour « On-Board Diagnostics » en anglais) et le déclenchement des reconfigurations du système sur détection de défaillances remontées par les diagnostics. Dans la présente invention, le module logiciel SW_GD/GAR pourra être sollicité par le module logiciel SW_CP pour déclencher un mode dégradé en fonction du résultat du diagnostic de plausibilité réalisé sur les informations de pression PR1 et PR2. Pour cela, un échange de données C_GD intervient entre les modules logiciels SW_CP et SW_GD/GAR.

Le calculateur C_ESC est ici le calculateur du correcteur « ESC ». Le calculateur C_ESC héberge un module logiciel SW_HBB/HBC chargé de la mise en œuvre de l'assistance « HBB/HBC » susmentionnée. Pour réaliser les stratégies « HBB/HBC », le module logiciel SW_HBB/HBC gère la pression de freinage dans le circuit hydraulique de freinage CF en actionnant la pompe hydraulique PH au moyen d'une commande C_PH. Dans la présente invention, le module logiciel SW_HBB/HBC pourra être sollicité par le module logiciel SW_CP pour déclencher une assistance « HBB/HBC » en fonction du résultat du diagnostic de plausibilité réalisé sur les informations de pression PR1 et PR2, notamment en cas de défaillance de la pompe à vide PV. Pour cela, un échange de données C_HB intervient entre les modules logiciels SW_CP et SW_HBB/HBC.

Par exemple, des modes dégradés MD1 à MD5 pourront être activés en fonction du résultat du diagnostic de plausibilité réalisé sur les informations de pression PR1 et PR2. Dans cet exemple, le mode MD1 est une remontée de défaut signalant une défaillance de fourniture de vide pour l'après-vente, le mode MD2 requiert le redémarrage du moteur thermique et une inhibition de la fonction, dite « Stop-and-Go », d'arrêt/redémarrage automatique du moteur thermique, le mode MD3 est une interdiction de roulage en mode électrique, le mode MD4 est un allumage d'un voyant informant le conducteur d'une défaillance dans son véhicule et le mode MD5 est un enclenchement de l'assistance « HBB/HBC » décrite ci-dessus.

Comme représenté schématiquement à la Fig.1, les différents échanges de données, telles que les informations de mesure de pression, les informations d'état et les commandes, interviennent à travers un réseau de communication de données de véhicule N_CAN, typiquement un réseau de type « CAN ». De manière générale, plusieurs informations issues d'organes et capteurs du véhicule pourront déjà être disponibles dans le calculateur CMM, car acquises par celui-ci pour différentes autres stratégies de commande, et seront alors directement utilisables par le module logiciel SW_PV. D'autres informations pourront être disponibles dans un autre calculateur du véhicule et transmises, via le réseau N_CAN, au module logiciel SW_PV hébergé dans le calculateur CMM. Ainsi, dans le mode de réalisation plus particulièrement décrit ici, il est considéré que les informations de pression PR2 et PM sont acquises par le calculateur C_ESC pour ses traitements et transmises par celui-ci au module logiciel SW_PV hébergé dans le calculateur CMM.

Dans le concept de l'invention, la plausibilité des informations de pression PR1, PR2, fournies par les capteurs de pression CP1, CP2, est vérifiée lors d'un appui AF par le conducteur sur la pédale de frein PF, désigné aussi « appui frein » par la suite. Un appui frein AF consomme du vide dans le servofrein SF et provoque une réduction de la dépression dans celui-ci.

Lors de cet évènement d'appui frein AF, si les informations de pression PR1, PR2, sont cohérentes avec cette évolution attendue de la dépression dans le servofrein, elles sont alors considérées comme étant plausibles. Dans le cas contraire, il est détecté une anomalie de plausibilité des informations de pression PR1, PR2.

La détection d'une anomalie de plausibilité des informations de pression PR1, PR2, entraîne une absence de confiance dans ces informations qui justifie un basculement dans un mode dégradé. L'objectif du basculement dans un mode dégradé est d'éviter l'émergence d'une situation de vie dans laquelle la performance de freinage du véhicule est affectée par une mesure déficiente de la pression dans la chambre en dépression du servofrein. La sûreté de fonctionnement est ainsi améliorée.

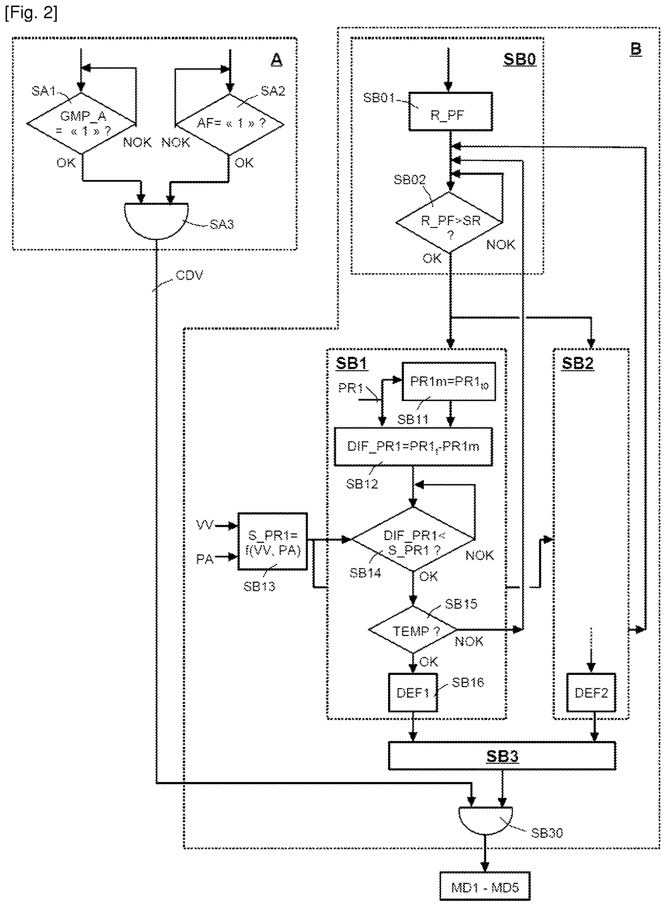

En référence à la Fig.2, il est maintenant décrit ci-dessus un exemple de processus de traitement réalisé par le module logiciel SW_CP pour la mise en œuvre du procédé selon l'invention.

Le processus de traitement comprend deux blocs fonctionnels A et B. Le bloc fonctionnel A concerne une vérification de conditions de validité du diagnostic de plausibilité sur les informations de pression PR1, PR2, fournies par les capteurs CP1, CP2. Le bloc fonctionnel B concerne le traitement d'établissement du diagnostic de plausibilité sur les informations de pression PR1, PR2, simultanément.

Comme visible à la Fig.2, le bloc fonctionnel A comprend essentiellement trois étapes principales SA1 à SA3.

La fonction SA1 détecte l'état actif ou pas du groupe motopropulseur à partir de l'information GMP_A susmentionnée. Tant que le groupe motopropulseur est inactif, cet état étant indiqué par l'information GMP_A= « 0 », une sortie « NOK » de la fonction SA1 est validée et cette fonction reste dans une boucle d'attente. Lorsque le groupe motopropulseur est actif, cet état est indiqué par l'information GMP_A= « 1 » est une sortie « OK » de la fonction SA1 est validée.

La fonction SA2 détecte un appui, ou pas, du conducteur sur la pédale de frein PF à partir de l'information AF susmentionnée. En absence d'appui sur la pédale de frein PF, indiquée par l'information AF= « 0 », une sortie « NOK » de la fonction SA2 est validée et cette fonction reste dans une boucle d'attente. Lorsqu'un appui est exercé sur la pédale de frein, cet appui est indiqué par l'information AF= « 1 » est une sortie « OK » de la fonction SA2 est validée.

La fonction SA3 est une fonction logique « ET » recevant en entrée les sorties « OK » des fonctions SA1 et SA2. Lorsque le groupe motopropulseur est actif GMP_A= « 1 » et qu'un appui AF= « 1 » est exercé sur la pédale de frein, la fonction SA3 délivre une information CDV= « 1 » qui indique que les conditions d'applicabilité sont remplies.

Dans l'exemple de réalisation décrit ci-dessus, la fonction SA2 utilise l'information d'appui frein AF disponible dans le calculateur CMM. En variante, cette fonction SA2 pourra être réalisée en utilisant l'information de pression de maître-cylindre PM, un appui frein AF= « 1 » étant alors validé lorsque la pression de maître-cylindre est supérieure pendant une certaine durée à un seuil de pression avec hystérésis.

Comme visible à la Fig.2, le bloc fonctionnel B comprend essentiellement une fonction de détection d'appui frein valide SB0, deux fonctions de détection de défaut SB1 et SB2 dédiées respectivement aux informations de pression PR1 et PR2 des capteurs de pression CP1 et CP2, et une fonction de décision d'anomalie de plausibilité SB3. Les traitements réalisés par les fonctions de détection de défaut SB1 et SB2 sont identiques. Seul le traitement effectué par la fonction de détection de défaut SB1 est décrit ci-après.

Conformément à l'invention, la détection de défaut sur les informations de pression PR1, PR2, est effectuée sur des appuis frein AF suffisamment forts, pour lesquels les essais et simulations réalisés par l'entité inventive ont donné des résultats optimaux. La fonction de détection d'appui frein valide SB0 quantifie un ratio R_PF d'enfoncement de la pédale de frein PF et compare le ratio R_PF à un seuil SR pour décider de la validité de l'appui frein AF correspondant pour réaliser un diagnostic de plausibilité des informations de pression PR1, PR2. Ainsi, dans la fonction SB0, une sous-fonction SB01 quantifie le ratio R_PF, en pourcent (%), à partir de l'information de pression de maître-cylindre PM, au moyen de l'égalité suivante : R_PF=(PM/PMmax)x100, dans laquelle PMmax est la pression de maître-cylindre maximum. Une autre sous-fonction SB02 de la fonction SB0 compare le ratio R_PF obtenu au seuil SR et valide l'appui frein AF correspondant en activant une sortie « OK » lorsque le ratio R_PF est supérieur au seuil SR (R_PF>SR). Dans le cas contraire, l'activation d'une sortie « NOK » invalide l'appui frein AF et la sous-fonction SB02 boucle en attente. La sortie « OK » délivrée par la sous-fonction SB02 active l'exécution des deux fonctions de détection de défaut SB1 et SB2.

Dans la fonction de détection de défaut SB1, à un temps t0 correspondant à l'activation de la fonction par la sortie « OK » de SB02, l'information de pression PR1ₜ₀ délivrée par le capteur CP1 est mémorisée par la sous-fonction SB11, avec PR1m étant l'information de pression PR1ₜ₀ mémorisée.

La sous-fonction SB12 calcule le delta d'évolution DIF_PR1=PR1ₜ-PR1m entre l'information de pression instantanée courante PR1ₜ délivrée par le capteur CP1 et l'information de pression mémorisée PR1m.

La détection de défaut sur l'information de pression PR1 fait appel aux sous-fonctions SB13, SB14 et SB15 et est réalisée par une comparaison du delta d'évolution DIF_PR1 à un seuil d'évolution de pression S_PR1 et l'application d'une durée de persistance TEMP.

Le seuil d'évolution de pression S_PR1 est variable et est défini par la sous-fonction SB13 en fonction de la vitesse de roulage VV du véhicule et de la pression atmosphérique PA, avec S_PR1=f(VV, PA). La sous-fonction SB14 compare le delta d'évolution DIF_PR1 au seuil d'évolution de pression S_PR1 et active une sortie « OK » lorsque le delta d'évolution DIF_PR1 est inférieur au seuil d'évolution de pression S_PR1, DIF_PR1<S_PR1. Dans le cas contraire, l'activation d'une sortie « NOK » maintient la sous-fonction SB14 dans une boucle d'attente.

La persistance pendant la durée TEMP de l'inégalité DIF_PR1 <S_PR1 est vérifiée par la sous-fonction SB15 qui active une sortie « OK » lorsque cette persistance est effective. Dans le cas contraire, c'est une sortie « NOK » qui est activée par la sous-fonction SB15. L'activation de la sortie « OK » de SB15 correspond une détection de défaut DEF1 sur l'information de pression PR1, détection de défaut DEF1 qui est activée par la sous-fonction SB16 avec DEF1 = « 1 ». L'activation de la sortie « NOK » de SB15 correspond à l'absence de détection de défaut et renvoie le processus à la sous-fonction SB02 en attente d'un prochain appui frein AF valide.

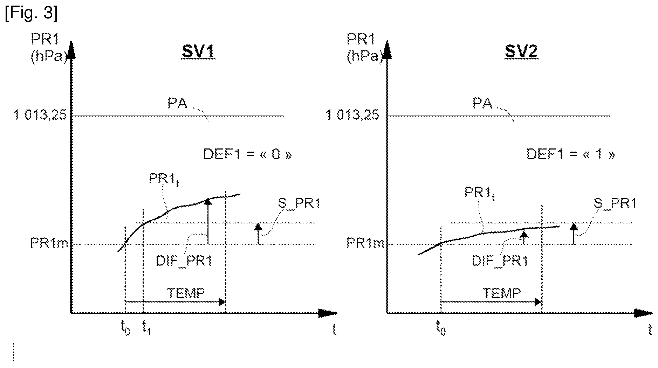

La Fig.3 illustre le traitement réalisé par la fonction de détection de défaut SB1 (ou SB2) pour deux situations de vie SV1 et SV2 correspondant respectivement à une non détection de défaut DEF1 (DEF2) = « 0 » et une détection de défaut DEF1 (DEF2) = « 1 ». Dans les courbes illustratives de la Fig.3, l'unité de pression est l'hectopascal (hPa).

Dans la situation de vie SV1, après le temps t0, la pression instantanée PR1ₜ dans la chambre en dépression du servofrein SF, indiquée par l'information de pression PR1, évolue rapidement de manière croissante du fait de la consommation de vide qui découle de l'appui frein AF. Le delta d'évolution DIF_PR1 ne reste inférieur au seuil d'évolution de pression S_PR1 que pendant une courte durée t1-t0 inférieure à la durée de persistance TEMP. L'évolution de PR1ₜ est conforme à celle attendue dans le cadre d'un fonctionnement normal et aucun défaut (DEF1 = « 0 ») n'est remonté par le processus pour l'information de pression PR1.

Dans la situation de vie SV2, après le temps t0, la pression instantanée PR1ₜ évolue lentement de manière croissante et le delta d'évolution DIF_PR1 reste inférieur au seuil d'évolution de pression S_PR1 pendant la durée de persistance TEMP. L'évolution PR1ₜ n'est pas conforme à celle attendue dans le cadre d'un fonctionnement normal et un défaut (DEF1 = « 1 ») est remonté par le processus pour l'information de pression PR1.

Dans le mode de réalisation décrit ci-dessus du procédé selon l'invention, il est réalisé une détection de défaut simple avec un seul seuil d'évolution de pression sur le delta d'évolution (comme S_PR1 pour DIF_PR1). On notera qu'il est dans la vision de l'entité inventive de réaliser la détection de défaut avec plusieurs seuils de pression de façon à pouvoir discriminer des défauts de différents types. Ainsi, dans un autre mode de réalisation particulier de l'invention, il est prévu un seuil d'évolution de pression supplémentaire sur le delta d'évolution, à savoir, un seuil d'évolution de pression plus bas, qui complète un seuil d'évolution de pression plus élevé (comme S_PR1 pour DIF_PR1), pour discriminer un défaut de figeage où l'information de pression donnée par le capteur évolue très peu.

La fonction de décision d'anomalie de plausibilité SB3 traite les résultats des détections de défaut DEF1, DEF2, réalisées par les fonctions de détection de défaut SB1, SB2, et décide de la présence d'une anomalie de plausibilité, ou pas, sur les informations de pressions PR1, PR2. La fonction SB3 réalise également une catégorisation l'anomalie de plausibilité en indiquant le type de celle-ci. Ainsi, l'anomalie de plausibilité pourra être catégorisée comme un mode commun entre les deux capteurs de pression PR1, PR2, un figeage ou une dérive supérieure des capteurs PR1, PR2, informant d'une dépression suffisante dans le servofrein SF alors que ce n'est pas le cas.

La fonction de décision d'anomalie de plausibilité SB3 est également chargée des communications (cf. G_GD et C_HB à la Fig.1) notamment avec le module logiciel SW_GD/GAR et/ou le module logiciel SW_HBB/HBC pour l'activation d'un ou plusieurs modes dégradés, comme par exemple les modes MD1 à MD5 décrits en référence à la Fig.1, suite à la détection d'une anomalie de plausibilité des informations de pression PR1, PR2. Cependant, avant d'autoriser ces communications et l'activation d'un mode dégradé, le processus contrôle que les conditions de validité vérifiées par le bloc fonctionnel A sont bien remplies. La fonction logique de type « ET », SB30, recevant en entrée l'information CDV issue du bloc fonctionnel A et une sortie de la fonction SB3 représente schématiquement ce contrôle avant les communications susmentionnées avec le module logiciel SW_GD/GAR et/ou le module logiciel SW_HBB/HBC.

L'invention ne se limite pas aux modes de réalisation particuliers qui ont été décrits ici à titre d'exemple. L'homme du métier, selon les applications de l'invention, pourra apporter différentes modifications et variantes entrant dans le champ de protection
défini par les revendications.

## Revendications

1. Procédé de diagnostic de la plausibilité d'au moins deux informations de pression de servofrein (PR1, PR2) issues de capteurs de pression distincts (CP1, CP2) dans un servofrein (SF) d'un système de freinage de véhicule (SFA), **caractérisé en ce qu'**il comprend les étapes de a) détecter (SB0) un appui frein valide (AF) par comparaison d'un ratio d'enfoncement de pédale de frein (R_PF) à un seuil de ratio d'enfoncement prédéterminé (SR), b) suivre (SB1, SB11, SB12 ; SB2) une évolution de chaque dite information de pression de servofrein (PR1, PR2) sur une période de temps prédéterminée (TEMP) à partir de la détection à l'étape a) d'un dit appui frein valide (AF), c) pour chaque dite information de pression de servofrein (PR1, PR2), effectuer (SB1, SB13, SB14, SB15, SB16 ; SB2) pendant ladite période de temps prédéterminée (TEMP) une détection de défaut (DEF1, DEF2) sur ladite information de pression de servofrein (PR1, PR2) par comparaison d'un delta d'évolution (DIF_PR1) de ladite information de pression de servofrein (PR1, PR2) à au moins un seuil d'évolution de pression (S_PR1), et d) établir (SB3) un diagnostic de plausibilité desdites informations de pression de servofrein (PR1, PR2) à partir des résultats de détection de défaut (DEF1, DEF2) obtenus à l'étape (c).

2. Procédé selon la revendication 1, **caractérisé en ce que** ladite étape d) comprend également une catégorisation (SB3) de ladite anomalie de plausibilité.

3. Procédé selon la revendication 1 ou 2, **caractérisé en ce que** ledit seuil d'évolution de pression (DIF_PR1) est un seuil variable (SB13) déterminé en fonction de la vitesse de roulage (VV) du véhicule et de la pression atmosphérique (PA).

4. Procédé selon l'une quelconque des revendications 1 à 3, **caractérisé en ce que**, à l'étape a), ledit ratio d'enfoncement de pédale de frein (R_PF) est déterminé à partir d'une pression hydraulique (PM) dans un maître-cylindre (MC) dudit système de freinage de véhicule (SFA).

5. Procédé selon l'une quelconque des revendications 1 à 4, **caractérisé en ce qu'**il comprend également une vérification (A, CDV, SB30) de conditions de validité dudit diagnostic de plausibilité des informations de pression de servofrein (PR1, PR2), lesdites conditions de validité étant satisfaites lorsqu'est détecté un état actif (SA1, GMP_A) d'un groupe motopropulseur du véhicule et un appui frein SA2, AF).

6. Procédé selon l'une quelconque des revendications 1 à 5, **caractérisé en ce qu'**il comprend également une communication (C_GD) dudit diagnostic de plausibilité à des moyens de gestion de mode dégradé (SW_GD/GAR) du véhicule.

7. Système de freinage de véhicule (SFA) comprenant un servofrein (SF) équipé de deux capteurs de pression distincts (CP1, CP2) délivrant des informations de pression de servofrein (PR1, PR2) et un calculateur (CMM), **caractérisé en ce que** ledit calculateur (CMM) comporte une mémoire (MEM) stockant des instructions de programme pour la mise en œuvre du procédé selon l'une quelconque des revendications 1 à 6.

8. Système de freinage de véhicule selon la revendication 7, **caractérisé en ce que** lesdits deux capteurs de pression (PR1, PR2) sont de même technologie.

9. Système de freinage de véhicule selon la revendication 7 ou 8, **caractérisé en ce que** ledit calculateur est un calculateur multifonction moteur (CMM) du véhicule.

10. **Véhicule** comprenant un système de freinage (SFA) selon l'une quelconque des revendications 7 à 9.

## Patentansprüche

1. Verfahren zur Diagnose der Plausibilität von mindestens zwei Bremskraftverstärkerdruckinformationen (PR1, PR2), die von getrennten Drucksensoren (CP1, CP2) in einem Bremskraftverstärker (SF) eines Fahrzeugbremssystems (SFA) stammen, **dadurch gekennzeichnet, dass** es die Schritte umfasst: a) Erfassen (SB0) einer gültigen Bremskraft (AF) durch Vergleichen eines Verdrängungsverhältnisses des Bremspedals (R_PF) mit einem vorbestimmten Verdrängungsverhältnisschwellwert (SR), b) Verfolgen (SB1, SB11, SB12; SB2) einer Entwicklung von jeder der Bremskraftverstärkerdruckinformationen (PR1, PR2) über eine vorbestimmte Zeitdauer (TEMP) ab der Erfassung in Schritt a) einer gültigen Bremskraftauflage (AF), c) für jede der Bremskraftverstärkedruckinformationen (PR1, PR2) eine Fehlererkennung (DEF1, DEF2) an der Bremskraftverstärkerdruckinformation (PR1, PR2) durch Vergleich eines Veränderungsdeltas (SB1, SB13, SB14, SB15, SB16; SB2) während der vorbestimmten Zeitdauer (TEMP) durchführen (DIF_PR1) der Bremskraftverstärkerdruckinformation (PR1, PR2) bei mindestens einer Druckänderungsschwelle (S_PR1) und d) die Diagnose der Plausibilität der Bremskraftverstärkerdruckinformation (PR1, PR2) aus den in Schritt (c) erhaltenen Fehlererkennungsergebnissen (DEF1, DEF2) zu erstellen (SB3).

2. Verfahren nach Anspruch 1, **dadurch gekennzeichnet, dass** der Schritt d) auch eine Kategorisierung (SB3) der Plausibilitätsanomalie umfasst.

3. Verfahren nach Anspruch 1 oder 2, **dadurch gekennzeichnet, dass** die Druckentwicklungsschwelle (DIF_PR1) eine variable Schwelle (SB13) ist, die in Abhängigkeit von der Fahrgeschwindigkeit (VV) des Fahrzeugs und dem Luftdruck (PA) bestimmt wird.

4. Verfahren nach einem der Ansprüche 1 bis 3, **dadurch gekennzeichnet, dass** in Schritt a) das Verhältnis der Bremspedalniederdrückung (R_PF) aus einem hydraulischen Druck (PM) in einem Hauptzylinder (MC) des Fahrzeugbremssystems (SFA) bestimmt wird.

5. Verfahren nach einem der Ansprüche 1 bis 4, **dadurch gekennzeichnet, dass** es auch eine Überprüfung (A, CDV, SB30) von Gültigkeitsbedingungen der Plausibilitätsdiagnose der Bremskraftverstärkerdruckinformation (PR1, PR2) umfasst, wobei die Gültigkeitsbedingungen erfüllt sind, wenn ein aktiver Zustand (SA1, GMP_A) einer Antriebsanlage des Fahrzeugs und eine Bremsstütze SA2, AF) erfasst wird.

6. Verfahren nach einem der Ansprüche 1 bis 5, **dadurch gekennzeichnet, dass** es auch eine Kommunikation (C_GD) der Plausibilitätsdiagnose mit Managementmitteln für den verschlechterten Modus (SW_GD/GAR) des Fahrzeugs umfasst.

7. Fahrzeugbremssystem (SFA) mit einem Bremskraftverstärker (SF), der mit zwei getrennten Drucksensoren (CP1, CP2) ausgestattet ist, die Bremskraftverstärkerdruckinformationen (PR1, PR2) liefern, und einem Rechner (CMM), **dadurch gekennzeichnet, dass** der Rechner (CMM) einen Speicher (MEM) aufweist, der Programmbefehle zur Durchführung des Verfahrens nach einem der Ansprüche 1 bis 6 speichert.

8. Fahrzeugbremssystem nach Anspruch 7, **dadurch gekennzeichnet, dass** die beiden Drucksensoren (PR1, PR2) die gleiche Technologie aufweisen.

9. Fahrzeugbremsanlage nach Anspruch 7 oder 8, **dadurch gekennzeichnet, dass** der Rechner ein Motor-Multifunktionsrechner (CMM) des Fahrzeugs ist.

10. Fahrzeug mit einem Bremssystem (SFA) nach einem der Ansprüche 7 bis 9.

## Claims

1. Method for diagnosing the plausibility of at least two pieces of brake pressure information (PR1, PR2) coming from separate pressure sensors (CP1, CP2) in a brake booster (SF) of a vehicle braking system (SFA), **characterized in that** it comprises the steps of a) detecting (SB0) a valid brake pressure (AF) by comparing a brake pedal depression ratio (R_PF) with a predetermined depression ratio threshold (SR), b) following (SB1, SB11, SB12; SB2) an evolution of each said piece of pressure information servo-brake (PR1, PR2) over a predetermined time period (TEMP) from the detection in step a) of a said valid brake pressure (AF), c) for each said servo-brake pressure information (PR1, PR2), performing (SB1, SB13, SB14, SB15, SB16; SB2) during said predetermined time period (TEMP) a detection of defect (DEF1, DEF2) on said servo-brake pressure information (PR1, PR2) by comparison of an evolution delta (DIF_PR1) from said servobrake pressure information (PR 1, PR 2) to at least one pressure change threshold (S_PR 1), and d) establishing (SB 3) a diagnosis of plausibility of said servobrake pressure information (PR 1, PR 2) from the fault detection results (DEF 1, DEF 2) obtained in step (c).

2. Method according to claim 1, **characterized in that** the said step d) also comprises a categorization (SB3) of the said plausibility anomaly.

3. Method according to claim 1 or 2, **characterized in that** the said pressure change threshold (DIF_PR1) is a variable threshold (SB13) determined as a function of the running speed (VV) of the vehicle and of the atmospheric pressure (PA).

4. Method according to any one of claims 1 to 3, **characterized in that**, in step a), the said brake pedal depression ratio (R_PF) is determined from a hydraulic pressure (PM) in a master cylinder (MC) of the said vehicle braking system (SFA).

5. Method according to any one of claims 1 to 4, **characterized in that** it also comprises a verification (A, CDV, SB30) of conditions of validity of the said diagnosis of plausibility of the brake booster pressure information (PR1, PR2), the said conditions of validity being satisfied when an active state (SA1, GMP_A) of a power train of the vehicle and a brake support SA2, AF) is detected.

6. Method according to any one of claims 1 to 5, **characterized in that** it also comprises a communication (C_GD) of the said plausibility diagnosis to means for managing the degraded mode (SW_GD/GAR) of the vehicle.

7. Vehicle braking system (SFA) comprising a brake booster (SF) equipped with two distinct pressure sensors (CP1, CP2) delivering brake booster pressure information (PR1, PR2) and a computer (CMM), **characterized in that** said computer (CMM) comprises a memory (MEM) storing program instructions for implementing the method according to any one of claims 1 to 6.

8. Vehicle braking system according to claim 7, **characterized in that** the said two pressure sensors (PR1, PR2) are of the same technology.

9. Vehicle braking system according to claim 7 or 8, **characterized in that** the said computer is a multifunction engine computer (CMM) of the vehicle.

10. Vehicle comprising a braking system (SFA) according to any one of claims 7 to 9.
